(19) Europäisches Patentamt

European Patent Office

Office européen des brevets

(11) Veröffentlichungsnummer: **0 278 347 B1**

(12) **EUROPÄISCHE PATENTSCHRIFT**

(45) Veröffentlichungstag der Patentschrift: **15.04.92**

(21) Anmeldenummer: **88101369.2**

(22) Anmeldetag: **01.02.88**

(51) Int. Cl.⁵: **C08L 25/12**, C08L 55/02

(54) Antistatische, thermoplastische Formmassen auf Basis von Vinylaromatpolymerisaten.

(30) Priorität: **13.02.87 DE 3704485**

(43) Veröffentlichungstag der Anmeldung:
**17.08.88 Patentblatt 88/33**

(45) Bekanntmachung des Hinweises auf die
Patenterteilung:
**15.04.92 Patentblatt 92/16**

(84) Benannte Vertragsstaaten:
**DE ES FR GB IT NL**

(56) Entgegenhaltungen:
**EP-A- 0 061 692**
**DE-B- 1 244 398**

**Römpps Chemie Lexikon, Band 5, Seite 3276**

(73) Patentinhaber: **BAYER AG**

**W-5090 Leverkusen 1 Bayerwerk(DE)**

(72) Erfinder: **Buysch, Hans-Josef, Dr.**
**Brandenburger Strasse 28**
**W-4150 Krefeld(DE)**
Erfinder: **Schön, Norbert, Dr.**
**Wilhelmshofallee 82**
**W-4150 Krefeld(DE)**
Erfinder: **Eichenauer, Herbert, Dr.**
**Goethestrasse 71**
**W-4047 Dormagen(DE)**
Erfinder: **Ott, Karl-Heinz, Dr.**
**Paul-Klee-Strasse 54**
**W-5090 Leverkusen(DE)**
Erfinder: **Pischtschan, Alfred, Dr.**
**Zur Eiche 33**
**W-5067 Kürten(DE)**

**Beschreibung**

Gegenstand der Erfindung sind antistatische, thermoplastische Formmassen auf Basis von gegebenenfalls kautschukmodifizierten Polymerisaten aus Vinylaromaten, z.B. Styrol und/oder $\alpha$-Methylstyrol und Acrylnitril und/oder Acrylaten, die als antistatisches Mittel einen mit Polymerisaten aus Acrylaten und gegebenenfalls anderen Vinylmonomeren modifizierten Polyether enthalten.

Die meisten Kunststoffe sind aufgrund ihrer chemischen Konstitution elektrische Isolatoren mit einem hohen elektrischen Oberflächenwiderstand. Das führt bei der Verarbeitung und im Gebrauch solcher Massen leicht zur elektrostatischen Aufladung der Kunststoffoberflächen. Die Folge sind vielfältige Störungen und Belästigung in der Praxis, z.B. schnelle Verschmutzung und Verstaubung der Kunststoffteile, wobei sich charakteristische Staubfiguren an der Oberfläche ausbilden. Dies gilt im besonderen Maß auch für gegebenenfalls kautschukmodifizierte als Formmassen verwendete Polymerisate aus Vinylaromaten und Acrylnitril, z.B. Styrol-Acrylnitril-Copolymerisate (SAN) und Pfropfpolymerisate von Styrol und Acrylnitril auf Polybutadien (ABS).

Die antistatische Ausrüstung solcher Formmassen ist bekannt. Als antistatische Mittel werden z.B. Alkyl- und Arylsulfonate (DE-OS 1 544 652), Amine (DE-PS 1 258 083), quartäre Ammoniumsalze, Amide, Phosphorsäuren sowie Alkyl- und Arylphosphonate empfohlen.

Die so antistatisch ausgerüsteten Formmassen haben noch Mängel. Viele der genannten Antistatika sind wenig wirksam und müssen in hohen Konzentrationen eingesetzt werden; viele dieser niedermolekularen Verbindungen wandern an die Oberfläche. Deshalb erhält man oft Formteile mit inhomogenen und fleckigen Oberflächen oder sogar Oberflächenbelägen. Häufig werden auch mechanische Eigenschaften, wie die Wärmeformbeständigkeit, stark beeinträchtigt.

Auch reine Polyether, wie z.B. in DE-PS 1 244 398, als hochmolekulare Antistatika vorgeschlagen, müssen zur sicheren Antistatikausrüstung von Styrolpolymerisaten in Mengen von ca. 5 Gew.-% oder mehr eingesetzt werden. Das führt zu fleckigen und schmierigen Oberflächen bis hin zu Oberflächenbelägen auf den Kunststoff-Fertigteilen.

Durch Pfropfpolymerisation von Styrol und Acrylnitril auf solche Polyether wie in EP-A-0 061 692 beschrieben, kann zwar die Antistatikwirkung verbessert werden, jedoch treten bei der Verarbeitung von Styrolpolmerisaten, die solche Antistatika enthalten, bei Temperaturen > 150°C gelbe bis braune Verfärbungen auf.

Es wurde gefunden, daß man durch Bepfropfen von Polyalkylenethern mit $C_1$-$C_6$-Alkylacrylaten, Cycloalkylacrylaten oder -methacrylaten und gegebenenfalls zusätzlich Styrol oder $\alpha$-Methylstyrol sehr gut wirksame Antistatika für Vinylaromatpolymerisate erhält, die die mechanischen Eigenschaften, die Oberflächeneigenschaften, Farbe und Thermostabilität der Vinylaromatpolymerisate nicht beeinträchtigen.

Gegenstand der Erfindung sind somit antistatische, thermoplastische Formmassen, bestehend aus

I 99,8 bis 95 Gew.-% eines gegebenenfalls kautschukmodifizierten Polymerisats aus Vinylaromaten, anderen Vinylmonomeren und üblichen Zusätzen, bestehend aus

(A) 0 bis 100 Gew.-% eines oder mehrerer Pfropfpolymerisate aus 10 bis 95 Gew.-% Kautschuk und 90 bis 5 Gew.-% pfropfpolymerisierte Monomere, die ausgewählt sind aus der Reihe Styrol, $\alpha$-Methylstyrol, Methylmethacrylat, oder 90 bis 5 Gew.-% einer pfropfpolymerisierten Mischung von 95 bis 50 Gew.-% Styrol, $\alpha$-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituierte Maleinimide oder Mischungen daraus, und die Kautschuke Glasübergangstemperaturen < 10°C aufweisen und in Form wenigstens partiell vernetzter Teilchen eines mittleren Teilchendurchmessers ($d_{50}$) von 0,05 bis 20 $\mu$m vorliegen, und

(B) 100 bis 0 Gew.-% eines oder mehrerer thermoplastischer Vinylpolymerisate, wobei die Monomere ausgewählt sind aus der Reihe Styrol, $\alpha$-Methylstyrol, Methylmethacrylat, kernsubstituiertem Styrol, Acrylnitril, Methacrylnitril, Maleinsäureanhydrid, Vinylacetat, N-substituiertem Maleinimid oder Mischungen daraus, und

II 0,2 bis 5,0 Gew.-% eines bepfropften Polyalkylenethers, der durch Pfropfung von 5 bis 50 Gew.-% eines Polymerisat aus $C_1$-$C_6$-Alkylacrylaten, Cycloalkylacrylaten oder Cycloalkylmethacrylaten und gegebenenfalls zusätzlich Styrol oder $\alpha$-Methylstyrol auf 95 bis 50 Gew.-% eines Polyalkylenethers, der ein Reaktionsprodukt aus Polyolen mit einem oder mehreren Alkylenoxiden ist und ein Molekulargewicht von 500 bis 15.000 hat, hergestellt worden ist.

Ein weiterer Gegenstand der Erfindung ist ein Verfahren zur antistatischen Ausrüstung von gegebenenfalls kautschukmodifizierten Polymerisaten von Vinylaromaten und anderen Vinylmonomeren wie oben beschrieben, das dadurch gekennzeichnet ist, daß man zu 99,8 bis 95 Gew.-% Polymerisat I 0,2 bis 5 Gew.-%, vorzugsweise 1,0 bis 3,0 Gew.-% eines Polyalkylenethers zufügt, der durch Pfropfung von 5 bis 50 Gew.-% Polymerisat aus $C_1$-$C_6$-Alkylacrylaten, Cycloalkylacrylaten oder -methacrylaten und gegebenenfalls zusätzlich Styrol oder $\alpha$-Methylstyrol auf 95 bis 50 Gew.-% Polyalkylenether, der ein Reaktionsprodukt aus Polyolen mit einem oder mehreren Alkylenoxiden ist und ein Molekulargewicht von 500 bis 15.000 hat, hergestellt worden ist.

Gegebenenfalls kautschukmodifizierte Copolymerisate aus Vinylaromaten und anderen Vinylmonomeren (I) im Sinne der Erfindung sind Mischungen aus A) 0 - 100 Gew.-% eines oder mehrerer Pfropfpolymerisate und B) 100 - 0 Gew.-% eines oder mehrerer thermoplastischen Vinylpolymerisate.

Pfropfpolymerisate (A) im Sinne der Erfindung sind solche, in denen auf einen Kautschuk harzbildende Monomere, d.h. entweder Styrol, $\alpha$-Methylstyrol, Methylmethacrylat oder eine Mischung von 95 - 50 Gew.-% Styrol, $\alpha$-Methylstyrol, kernsubstituiertem Styrol, Methylmethacrylat oder Mischungen daraus und 5 - 50 Gew.-% (Meth)Acrylnitril, Maleinsäureanhydrid, N-substituierte Maleinimide oder Mischungen daraus pfropfpolymerisiert sind. Geeignete Kautschuke sind praktisch alle Kautschuke mit Glasübergangstemperaturen < 10°C. Beispiele sind Polybutadien, Polyisopren, Styrol-Butadien-Copolymerisate, Acrylnitril-Butadien-Copolerisate, Acrylkautschuke, EPM-Kautschuke (Ethylen/Propylen-Kautschuke) und EPDM-Kautschuke (Ethylen/Propylen/Dien-Kautschuke), die als Dien ein nichtkonjugiertes Dien, wie z.B. Hexadien-1,5 oder Norbornadien, in kleinen Mengen enthalten. Bevorzugt sind Dienkautschuke.

Die Pfropfmischpolymerisate (A) enthalten 10 - 95 Gew.-%, insbesondere 20 - 70 Gew.-%, Kautschuk und 90 - 5 Gew.-%, insbesondere 80 - 30 Gew.-%, pfropfcopolymerisierte Monomere. Die Kautschuke liegen in diesen Pfropfmischpolymerisaten in Form wenigstens partiell vernetzter Teilchen eines mittleren Teilchendurchmessers ($d_{50}$) von 0,05 bis 20,0 $\mu$m, bevorzugt von 0,1 bis 2,0 $\mu$m und besonders bevorzugt von 0,1 bis 0,8 $\mu$m, vor. Derartige Pfropfmischpolymerisate können durch radikalische Pfropfcopolymerisa-ten von Styrol, $\alpha$-Methylstyrol, kernsubstituierten Styrol, (Meth)Acrylnitril, Methylmethacrylat, Maleinsäureanhydrid, N-substituiertem Maleinimid in Gegenwart der zu pfropfenden Kautschuke hergestellt werden. Bevorzugte Herstellungsverfahren sind die Emulsions-, Lösungs-, Masse- oder Suspensionspolymerisation.

Die Copolymerisate (B), auch als thermoplastische Matrixharze bezeichnet, können aus den Pfropfmonomeren für (A) (harzbildende Monomere) oder ähnlichen Monomeren durch Polymerisation aufgebaut werden, insbesondere aus Styrol, $\alpha$-Methylstyrol, Halogenstyrol, Acrylnitril, Methacrylnitril, Methylmethacrylat, Maleinsäureanhydrid, Vinylacetate, N-substituiertem Maleinimid oder Mischungen daraus. Es handelt sich bevorzugt um Copolymerisate aus 95 - 50 Gew.-% Styrol, $\alpha$-Methylstyrol, Methylmethacrylat oder Mischungen daraus mit 5 - 50 Gew.-% Acrylnitril, Methacrylnitril, Methylmethacrylat, Maleinsäureanhydrid oder Mischungen daraus. Solche Copolymere entstehen auch bei der Pfropfmischpolymerisation als Nebenprodukte. Es ist üblich, neben den im Pfropfpolymerisat enthaltenden Copolymeren noch getrennt hergestellte Copolymere zuzumischen.

Diese müssen nicht mit den in den Pfropfpolymeren vorliegenden ungepfropften Harzanteilen chemisch identisch sein.

Geeignete getrennt hergestellte Copolymere sind harzartig, thermoplastische und kautschukfrei; es sind insbesondere Copolymere aus Styrol und/oder $\alpha$-Methylstyrol mit Acrylnitril, gegebenenfalls in Mischung mit Methylmethacrylat.

Besonders bevorzugte Copolymerisate bestehen aus 20 - 40 Gew.-% Acrylnitril und 80 - 60 Gew.-% Styrol oder $\alpha$-Methylstyrol. Solche Copolymerisate sind bekannt und lassen sich insbesondere durch radikalische Polymerisation, insbesondere durch Emulsion-, Suspension-, Lösungs-oder Massepolymerisation herstellen. Die Copolymerisate besitzen vorzugsweise Molekulargewichte von 15.000 bis $2.10^5$.

Die bepfropften Polyether (II) im Sinne der Erfindung werden durch radikalische Polymerisation von 5 - 50 Gew.-%, bevorzugt von 10 - 30 Gew.-%, $C_1$-$C_6$-Alkylacrylaten, Cycloalkylacrylaten, $C_1$-$C_6$-Alkylmetha-crylaten oder Cycloalkylmethacrylaten und gegebenenfalls Styrol oder $\alpha$-Methylstyrol in Gegenwart von 95 - 50 Gew.-%, bevorzugt 90 - 70 Gew.-% eines Polyalkylenethers hergestellt.

Zur Polymerisation können alle handelsüblichen Radikalstarter, wie z.B. Diacylperoxide, Perester, Dialkylperoxide, Hydroperoxide und alipfatische bzw. araliphatische Azoverbindungen eingesetzt werden. Bevorzugte Radikalstarter, z.B. Azoisobutyronitril, Di-tert.-butylperoxid, tert.-Butylperbenzoat, Dicumylperoxid und 1,3-Bis(tert.-butylperoxyisopropyl)benzol starten die Polymerisation bei Temperaturen von 60 - 140°C ausreichend schnell. Besonders bevorzugt ist Dibenzoylperoxid.

Die erfindungsgemäß zu bepfropfenden Polyalkylenether sind aus di- und polyfunktionellen (cyclo)-aliphatischen Resten aufgebaut und können in geringem Maße auch olefinische Gruppen enthalten. Geeignet sind Reaktionsprodukte aus Di- oder Polyolen, Ethylenglykol, 1,2-Propylenglykol, Trimethylolpropan, Glycerin, Pentaerythrit, Sorbit und Mannit und einem oder mehreren Alkylenoxiden, wie Ethylenoxid und Propylenoxid. (Herstellung und Verwendung siehe Ullmanns Encyklopädie der technischen Chemie, 4. Aufl., Bd. 19, S. 31, Verlag Chemie, Weinheim 1980). Dabei werden Polyalkylenglykole mit hohen Anteilen an 1,2-Propylenstrukturen bevorzugt.

Es können sowohl lineare als auch verzweigte Polyalkylenether verwendet werden, wobei mäßig verzweigte Typen bevorzugt werden.

Die erfindungsgemäß zu bepfropfenden Polyalkylen, besitzen Molekulargewichte zwischen 500 und 15.000, bevorzugt zwischen 1000 und 10.000 und besonders bevorzugt zwischen 2000 und 5000.

Die als Monomere für die Pfropfpolymerisaten geeigneten $C_1$-$C_6$-Alkylacrylate, Cycloalkylacrylate und -methacrylate können auch funktionelle Gruppen enthalten, z.B. sind 2-Hydroxyethyl(meth)acrylat und 3-Hydroxypropyl(meth)acrylat, verwendbar. Bevorzugt sind Methylmethacrylat, Ethylacrylat, Butylacrylat, Cyclohexylacrylat, Benzylacrylat und 2-Äthylhexylacrylat.

Zusätzlich zu diesen Acrylatmonomeren können auch Styrol und $\alpha$-Methylstyrol mitverwendet werden.

Die bepfropfend modifizierten Polyalkylenether sind in der Regel mittel- bis hochviskose, nahezu klare Flüssigkeiten oder farblose Suspensionen.

Die erfindungsgemäß bepfropften Polyalkylenether werden nach bekannten Methoden, z.B. durch gemeinsames Kneten, Verwalzen oder Extrudieren in die auszurüstenden Polymere eingearbeitet. Neben den erfindungsgemäßen Antistatika können den Formmassen die üblichen Zusätze wie z.B. Pigmente, Füllstoffe, Stabilisatoren, Gleitmittel, Entformungsmittel, Flammschutzmittel und dergleichen zugesetzt werden.

Die so hergestellten Formmassen werden mit den für Thermoplasten üblichen Methoden, z.B. durch Spritzguß, zu Fertigteilen wie Gehäuseteilen für Haushalts- und Elektrogeräte, Profilteilen, Automobilinnenausstattungen, Folien, u.a. Teilen verarbeitet.

Die fertigen Formteile zeichnen sich durch hervorragende antistatische Eigenschaften und belagfreie, glänzende und homogene Oberflächen aus. Die mechanischen Eigenschaften wie Wärmeformbeständigkeit und die Schlagzähigkeit, auch bei tiefen Temperaturen, sind im Vergleich zum unmodifizierten Material praktisch nicht beeinträchtigt. Insbesondere werden Farbe und Thermostabilität des Polymermaterials durch die erfindungsgemäßen Antistatika nicht negativ beeinflußt.

Beispiele

Komponenten I:

Polymerisat I-A:

a) 60 Gew.-Teile Styrol/Acrylnitril/Copolymerisat aus 72 Gew.-Teilen Styrol und 28 Gew.-Teilen Acrylnitril mit einer Grenzviskosität $\pi_i = 55$ (ml/g) (gemessen in Dimethylformamid bei 23°C) und

b) 40 Gew.-Teile Pfropfpolymerisat von 36 Gew.-Teilen Styrol und 14 Gew.-Teilen Acrylnitril auf 50 Gew.-Teile teilchenförmiges Polybutadien, erhalten durch Polymerisation der Monomeren in Anwesenheit eines Gemischs von 50 Gew.-% Polybutadienlatex mit mittlerem Teilchendurchmesser ($d_{50}$) von ca. 100 nm und 50 Gew.-% eines ebensolchen Latex mit mittlerem Teilchendurchmesser von ca. 400 nm.

Polymerisat I-B:

Zusammensetzung wie I-A, jedoch mit 1 Gew.-% Farbruß schwarz eingefärbt.

Polymerisat I-C:

a) 77,5 Gew.-Teile eines Copolymerisats von 72 Gew.-Teilen $\alpha$-Methylstyrol und 28 Gew.-Teilen Acrylnitril mit einer Grenzviskosität $\pi_i = 53$ (ml/g) (gemessen in Dimethylformamid bei 20°C) und
b) 22,5 Gew.-Teilen des in I-A verwendeten Pfropfpolymerisats.
Das Polymerisat I-C ist mit 1 Gew.-% Farbruß schwarz eingefärbt.

Polyether II:

Allgemeine Herstellvorschrift:

Innerhalb von 2 - 3 Stunden wird ein Vinylmonomeres oder ein Gemisch aus mehreren Vinylmonomeren bei 95 - 100°C unter Luftausschluß zu einem Polyether und Dibenzoylperoxid (ca. 1 Gew.-%) getropft und anschließend das Gemisch bei derselben Temperatur in 5 - 6 Stunden auspolymerisiert.

4

Polyether II-a

25 Gew.-Teile Methylmethacrylat werden in Gegenwart von 75 Gew.-Teilen eines Polyhydroxy-polyalkylenethers (OH-Zahl = 28) aus Trimethylolpropan, Propylenoxid (87 Teile) und Ethylenoxid (13 Teile) polymerisiert.

Polyether II-b

15 Gew.-Teile Ethylacrylat werden in Gegenwart von 85 Gew.-Teilen des bei II-a verwendeten Polyalkylenethers polymerisiert.

Polyether II-c

10 Gew.-Teile Methylmethacrylat wurden in Gegenwart von 90 Gew.-Teilen eines linearen Polypropylenoxids mit einem mittleren Molekulargewicht von 2000 polymerisiert.

Polyether II-d

30 Gew.-Teile Butylacrylat wurden in Gegenwart von 70 Gew.-Teilen des bei II-c verwendeten Polyalkylenethers polymerisiert.

Polyether II-e

25 Gew.-Teile Methylmethacrylat wurden in Gegenwart von 75 Gew.-Teilen eines Polyhydroxy-polyalkylenethers (OH-Zahl = 28) aus Sorbit, Propylenoxid (82 Teile) und Ethylenoxid (18 Teile) polymerisiert.

Polyether II-f

Ein Gemisch aus 13 Gew.-Teilen Methylmethacrylat und 13 Gew.-Teilen Styrol wurden in Gegenwart von 74 Gew.-Teilen des bei II-e verwendeten Polyalkylenoxids polymerisiert,

Polyether II-g

25 Gew.-Teile Methylmethacrylat wurden in Gegenwart von 75 Gew.-Teilen eines Polyhydroxy-polyalkylenethers (OH-Zahl = 46) aus Trimethylolpropan, propylenoxid (85 Teile) und Ethylenoxid (15 Teile) polymerisiert.

Polyether II-h (zum Vergleich)

10 Gew.-Teile Styrol und 10 Gew.-Teile Acrylnitril wurden in Gegenwart von 80 Gew.-Teilen des bei II-a verwendeten Polyalkylenethers polymerisiert.

Antistastikum II-i (zum Vergleich)

Trishydroxyethyliertes Dodecylamin.

Polyether II-k (zum Vergleich)

Das bei II-c verwendete Polyalkylenether.

Einarbeitung der Komponenten II (Polyether) in die Komponenten I:

Die Komponenten I lagen als handelsübliche ABS-Polymerisate in Granulatform vor.
Die antistatischen Mittel wurden zugewogen und durch gemeinsames Kneten unter Aufschmelzen in einem 3 1-Innenkneter vom Banbury-Typ homogen im ABS-Polymeren verteilt. Innerhalb von 3 bis 5 min Knetzeit stieg die Temperatur auf Werte bis zu 210°C. Die ausgeworfenen Schmelzen (Puppen) wurden flachgewalzt, geschnitten und granuliert. Prüfkörper wurden durch Spritzgießen entsprechend der üblichen Arbeitsweise hergestellt.

Die Prüfung des antistatischen Verhaltens erfolgte durch Auslegen von Formteilen der Abmessungen 155x75x2 (mm) in stark staubiger Umgebung und Beobachtung der Staubfigurenentwicklung (1 bis mehrere Tage, danach über einige Wochen). Die nicht antistatisch ausgerüstete Vergleichsprobe und Proben mit Ausrüstung entsprechend dem Stand der Technik waren Bestandteile jeder Prüfserie.

Das gleiche Formteil wurde zur Begutachtung der Oberflächenqualität benutzt. (Glanz, Einheitlichkeit, Fleckenbildung, Fließlinienausbildung). Die Glanzmessung erfolgte nach ASTM D 523 bzw. DIN 67 530.

Als praxisgerechtes Formteil wurde in einigen Fällen ein Telefongehäuse gespritzt. An den gekrümmten Flächen sind auch leichte Unterschiede der Oberflächenqualität zu erkennen.

Zur Prüfung der Thermostabilität wurden Musterplättchen der Dimension 60x40x2 (mm) im (langen) 75 sec-Zyklus über von 220 auf 280°C ansteigender Massetemperatur spritzgegossen. Visuell wurden Rohton, Farbänderungen und Veränderungen der Oberflächenbeschaffenheit (z.B. Bildung von Silberschlieren) beobachtet.

An Normkleinstäben 50x6x4 (mm) wurden die wichtigsten mechanischen Werte ermittelt (Schlag- und Kerbschlagzähigkeit nach DIN 53 453, Härte nach DIN 53 456) sowie die als Entwicklungsziel wichtige Vicat-Erweichungstemperatur (B 120 nach DIN 53 460). Die Vicat-Erweichungstemperaturen wurden als Differenzwerte (Δ Vicat) im Vergleich zu den nicht antistatisch ausgerüsteten Polymerisaten I-A bis C angegeben.

Zur besseren Übersichtlichkeit wurden alle Prüfergebnisse in den Tabellen durch Symbole ausgedrückt. Es bedeutet:

+ = sehr gut
( + ) = gut
| = mit Schwächen
(-) = schwach
- = unbrauchbar

Aus der Tabelle ist zu erkennen, daß die erfindungsgemäßen antistatischen Mittel deutliche Vorteile gegenüber den dem Stand der Technik entsprechend verwendeten Antistatika aufweisen: bei vergleichbarer antistatischer Wirksamkeit senken sie die Wärmeformbeständigkeit wesentlich weniger ab, sie führen zu verbesserter Thermostabilität und zu Formteiloberflächen mit geringerer Neigung zu visuell sichtbaren Störeffekten.

Tabelle

| Bsp. Nr. | Poly-merisat I | Anti-statikum II | $C_{II}$ (Gew.-%) | Thermo-stab. | Prüfergebnisse Oberflächen-qualität | $\Delta$ Vicat B ($^{0}$C) | antistat. Wirkung |
|---|---|---|---|---|---|---|---|
| 1 | A | - | - | + | + | 0 | - |
| 2 | B | - | - | | + | 0 | - |
| 3 | C | - | - | | (+) | 0 | - |

Erfindungsgemäße Antistatika

| | | | | | | | |
|---|---|---|---|---|---|---|---|
| 4 | A | a | 1,0 | | + | 0 | + |
| 5 | C | a | 1,5 | | (+) | 0 | + |
| 6 | A | b | 1,0 | + | + | -0,5 | (+) |
| 7 | B | b | 1,0 | | + | 0 | (+) |
| 8 | A | c | 1,0 | + | + | 0 | (+) |
| 9 | C | c | 1,5 | | (+) | -2 | + |

**Tabelle** (Fortsetzung)

| Bsp. Nr. | Poly-merisat I | Anti-statikum II | $C_{II}$ (Gew.-%) | Thermo-stab. | Prüfergebnisse | | |
|---|---|---|---|---|---|---|---|
| | | | | | Oberflächen-qualität | $\Delta$ Vicat B (°C) | antistat. Wirkung |
| **Erfindungsgemäße Antistatika** | | | | | | | |
| 10 | A | d | 1,0 | + | + | -2 | + |
| 11 | A | e | 1,0 | + | + | -0,5 | + |
| 12 | B | e | 1,5 | | + | -0,5 | + |
| 13 | A | f | 1,0 | + | + | -0,5 | + |
| 14 | B | f | 1,0 | | + | -1 | (+) |
| 15 | A | g | 1,0 | | + | -2 | + |
| **Nicht erfindungsgemäße Antistatika** | | | | | | | |
| 16 | A | h | 1,0 | - | - | 0 | (+) |
| 17 | A | i | 1,0 | (+) | (+) | -3,5 | (+) |
| 18 | C | i | 1,0 | | | -5 | + |
| 19 | A | k | 1,0 | | - | -4 | (+) |

## Patentansprüche

1. Thermoplastische Formmassen aus

I 99,8 bis 95 Gew.-% eines gegebenenfalls kautschukmodifizierten Polymerisats aus Vinylaromaten, anderen Vinylmonomeren und üblichen Zusätsen, bestehend aus

(A) 0 bis 100 Gew.-% eines oder mehrerer Pfropfpolymerisate aus 10 bis 95 Gew.-% Kautschuk und 90 bis 5 Gew.-% pfropfpolymerisierte Monomere, die ausgewählt sind aus der Reihe Styrol, $\alpha$-Methylstyrol, Methylmethacrylat, oder 90 bis 5 Gew.-% einer Pfropfpolymerisierten Mischung von 95 bis 50 Gew.-% Styrol, $\alpha$-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituierte Maleinimide oder Mischungen daraus, und die Kautschuke Glasübergangstemperaturen < 10°C aufweisen und in Form wenigstens partiell vernetzter Teilchen eines mittleren Teilchendurchmessers ($d_{50}$) von 0,05 bis 20 $\mu$m vorliegen, und

(B) 100 bis 0 Gew.-% eines oder mehrerer thermoplastischer Vinylpolymerisate, wobei die Monomere ausgewählt sind aus der Reihe Styrol, $\alpha$-Methylstyrol, Methylmethacrylat, kernsubstituiertem Styrol, Acrylnitril, Methacrylnitril, Maleinsäureanhydrid, Vinylacetat, N-substituiertem Maleinimid oder Mischungen daraus, und

II 0,2 bis 5,0 Gew.-% eines bepfropften Polyalkylenethers, der durch Pfropfung von 5 bis 50 Gew.-% eines Polymerisats aus $C_1$-$C_6$-Alkylacrylaten, Cycloalkylacrylaten oder Cycloalkylmethacrylaten und gegebenenfalls zusätzlich Styrol oder $\alpha$-Methylstyrol auf 95 bis 50 Gew.-% eines Polyalkylenethers, der ein Reaktionsprodukt aus Polyolen mit einem oder mehreren Alkylenoxiden ist und ein Molekulargewicht von 500 bis 15.000 hat, hergestellt worden ist.

2. Verfahren zur antistatischen Ausrüstung von gegebenenfalls kautschukmodifizierten Polymerisaten aus Vinylaromaten, anderen Vinylmonomeren und üblichen Zusätzen gemäß Anspruch 1, dadurch gekennzeichnet, daß man zu 99,8 bis 95 Gew.-% Polymerisat I 0,2 bis 5 Gew.-% eines bepfropften Polyalkylenethers zufügt, der durch Pfropfung von 5 bis 50 Gew.-% eines Polymerisats aus $C_1$-$C_6$-Alkylacrylaten, Cycloalkylacrylaten oder Cycloalkylmethacrylaten und gegebenenfalls zusätzlich Styrol oder $\alpha$-Methylstyrol auf 95 bis 50 Gew.-% Polyalkylenether, der ein Reaktionsprodukt aus Polyolen mit einem oder mehreren Alkylenoxiden ist und ein Molekulargewicht von 500 bis 15.000 hat, hergestellt worden ist.

## Claims

1. Thermoplastic moulding compounds of

I 99.8 to 95% by weight of an optionally rubber-modified polymer of aromatic vinyl compounds, other vinyl monomers and typical additives, consisting of

(A) 0 to 100% by weight of one or more graft polymers of 10 to 95% by weight rubber and 90 to 5% by weight graft-polymerized monomers selected from the group consisting of styrene, $\alpha$-methyl styrene, methyl methacrylate or 90 to 5% by weight of a graft-polymerized mixture of 95 to 50% by weight styrene, $\alpha$-methyl styrene, nucleus-substituted styrene, methyl methacrylate or mixtures thereof and 5 to 50% by weight acrylonitrile, methacrylonitrile, maleic anhydride, N-substituted maleic imides or mixtures thereof and the rubbers have glass transition temperatures < 10°C and are present in the form of at least partly crosslinked particles having an average particle diameter ($d_{50}$) of 0.05 to 20 $\mu$m and

(B) 100 to 0% by weight of one or more thermoplastic vinyl polymers, the monomers being selected from the group consisting of styrene, $\alpha$-methyl styrene, methyl methacrylate, nucleus-substituted styrene, acrylonitrile, methacrylonitrile, maleic anhydride, vinyl acetate, N-substituted maleic imide or mixtures thereof and

II 0.2 to 5.0% by weight of a grafted polyalkylene ether which has been obtained by grafting of 5 to 50% by weight of a polymer of $C_{1-6}$ alkyl acrylates, cycloalkyl acrylates or cycloalkyl methacrylates and, optionally, styrene or $\alpha$-methyl styrene onto 95 to 50% by weight of a polyalkylene ether which is a reaction product of polyols with one or more alkylene oxides and has a molecular weight of 500 to 15,000.

2. A process for the antistatic treatment of the optionally rubber-modified polymers of aromatic vinyl compounds, other vinyl monomers and typical additives claimed in claim 1, characterized in that 0.2 to 5% by weight of a grafted polyalkylene ether obtained by grafting of a polymer of $C_{1-6}$ alkyl acrylates, cycloalkyl acrylates or cycloalkyl methacrylates and, optionally, styrene or $\alpha$-methyl styrene onto 95 to 50% by weight polyalkylene ether, which is a reaction product of polyols with one or more alkylene oxides and has a molecular weight of 500 to 15,000, is added to 99.8 to 95% by weight polymer I.

**Revendications**

1. Matières à mouler thermoplastiques formées de

I 99,8 à 95 % en poids d'un polymérisat, éventuellement modifié par un caoutchouc, de composés vinyl-aromatiques, d'autres monomères vinyliques et d'additifs classiques, comprenant

(A) 0 à 100 % en poids d'un ou plusieurs polymérisats de greffage de 10 à 95 % en poids de caoutchouc et de 90 à 5 % en poids de monomères polymérisés par greffage, qui sont choisis dans la série styrène, $\alpha$-méthylstyrène, méthacrylate de méthyle, ou 90 à 5 % en poids d'un mélange, polymérisé par greffage, de 95 à 50 % en poids de styrène, d'$\alpha$-méthylstyrène, de styrène substitué sur le noyau, de méthacrylate de méthyle ou de leurs mélanges et de 5 à 50 % en poids d'acrylonitrile, de méthacrylonitrile, d'anhydride d'acide maléique, de maléimides substitués sur l'azote ou de leurs mélanges, et les caoutchoucs présentent des températures de transition vitreuse inférieures à 10°C et sont sous forme de particules au moins partiellement réticulées ayant un diamètre moyen ($d_{50}$) de 0,05 à 20 $\mu$m, et

(B) 100 à 0 % en poids d'un ou plusieurs polymérisats vinyliques thermoplastiques, les monomères étant choisis dans la série styrène, $\alpha$-méthylstyrène, méthacrylate de méthyle, styrène substitué sur le noyau, acrylonitrile, méthacrylonitrile, anhydride d'acide maléique, acétate de vinyle, maléimide substitué sur l'azote ou leurs mélanges, et

II 0,2 à 5,0 % en poids d'un polyalkylèneéther greffé, qui a été produit par greffage de 5 à 50 % en poids d'un polymérisat d'acrylates d'alkyle en $C_1$ à $C_6$, d'acrylates de cycloalkyle ou de méthacrylates de cycloalkyle et en outre, le cas échéant, de styrène ou d'$\alpha$-méthylstyrène sur 95 à 50 % en poids d'un polyalkylène-éther qui est un produit de réaction de polyols avec un ou plusieurs oxydes d'alkylènes et qui a un poids moléculaire de 500 à 15 000.

2. Procédé d'apprêtage antistatique de polymérisats éventuellement modifiés par un caoutchouc, d'hydrocarbures vinyl-aromatiques, d'autres monomères vinyliques et d'additifs classiques suivant la revendication 1, caractérisé en ce qu'on ajoute à 99,8-95 % en poids de polymérisat I, 0,2 à 5 % en poids d'un polyalkylèneéther greffé, qui a été produit par greffage de 5 à 50 % en poids d'un polymérisat d'acrylates d'alkyle en $C_1$ à $C_6$, d'acrylates de cycloalkyle ou de méthacrylates de cycloalkyle et en outre le cas échéant de styrène ou d'$\alpha$-méthylstyrène sur 95 à 50 % en poids de polyalkylène-éther qui est un produit de réaction de polyols avec un ou plusieurs oxydes d'alkylènes et qui présente un poids moléculaire de 500 à 15 000.